# EUROPEAN PATENT APPLICATION

(11) **EP 3 839 607 A1**
(43) Date of publication of application: **23.06.2021**
(21) Application number: 19218670.8
(22) Date of filing: 20.12.2019
(51) Int. Cl.: G02B 27/01, G02B 27/00, G02F 1/313

(54) **AN OPTICAL DEVICE AND A NEAR EYE DISPLAY**

(71) Applicant: Imec VZW, 3001 Leuven (BE); Katholieke Universiteit Leuven KU Leuven Research & Development, 3000 Leuven (BE)
(72) Inventor: SMOLENTSEV, Nikolay, 3001 Leuven (BE); GEHLHAAR, Robert, 3001 Leuven (BE); HEREMANS, Paul, 3001 Leuven (BE)
(74) Representative: Roth, Sebastian

(57) **Abstract**

The present disclosure relates to an optical device for a Near Eye Display (NED). The optical device comprising a waveguide, a first Optical Element (OE), a switchable second OE and a third OE. The first OE receives light and couples the light into the waveguide towards the switchable second OE. The switchable second OE comprising a plurality of independently switchable optical segments arranged one after the other along the waveguide. The switchable second OE receives the light from the first OE and redirects the light, with the switchable optical segments, into the waveguide towards the third OE. Moreover, the third OE couples the light received from the switchable second OE out of the optical device. The present disclosure also provides a NED device comprising an optical device and an image generator. The image generator emits light corresponding to an image to a waveguide of the optical device.

## Description

### TECHNICAL FIELD

The present disclosure relates to an optical device, particularly to an optical device for a Near Eye Display (NED), and to a NED device including the optical device. The optical device includes a plurality of switchable optical segments, which can be switched independently to control the outcoupling of light, in order to reduce the optical loss. The NED device may be, for example, a transparent NED, such as an Augmented Reality (AR) glass.

### BACKGROUND OF THE INVENTION

Generally, AR and Mixed Reality (MR) glasses superimpose a computer-generated digital image on a user's view of the real world. An important part of such AR (or MR) glasses is an optical combiner. The optical combiner is a special optical element, which may be transparent for the real-world image, and may reflect the computer-generated image into the user's eye.

There are a few conventional technologies and designs for such optical combiners. For instance, diffractive, holographic, and reflective waveguide technologies are suggested for manufacturing thin flat glass optical combiners.

Moreover, conventional AR devices are suggested based on diffractive waveguides. However, those devices have a large form factor, namely that of a headset, and not of glasses. One of the reasons for this is the need for a large battery, in order to drive their displays. The displays in those devices have to provide high brightness, because of large losses in the diffractive waveguides. However, high-brightness displays require a lot of power, thus the large batteries are required. Moreover, because of this battery requirements, the headsets are also heavy.

Some conventional AR devices use optical combiners based on diffractive technology, holographic technology, or reflective technology. However, all these devices suffer from large losses of light in the optical path from the display to the retina of the user.

### SUMMARY OF THE INVENTION

In view of the above-mentioned disadvantages, embodiments of the present invention aim to provide an improved optical device, which can function as optical combiner, and an improved NED device. An objective is, in particular, that the optical device reduces losses of light. The optical device should avoid unnecessary illumination. For instance, the optical device should allow projecting a computer-generated image only to an area that corresponds to a position of a pupil of a user's eye. In particular, the optical device should avoid illuminating an entire eye-box at once. Another goal is to reduce the power consumption. Moreover, another goal is to decrease the weight of the NED device.

The objective is achieved by the embodiments of the invention provided in the enclosed independent claims. Advantageous implementations of these embodiments are defined in the dependent claims.

A first improvement of the conventional optical devices and methods resulted in an exemplary optical device (i.e., functional as an optical combiner). This optical device is described in the following, because it simplifies the understanding of the embodiments of the present invention and their advantages. Further, the exemplary optical device lays a basis for the embodiments of the invention, and shares some advantageous properties with these embodiments.

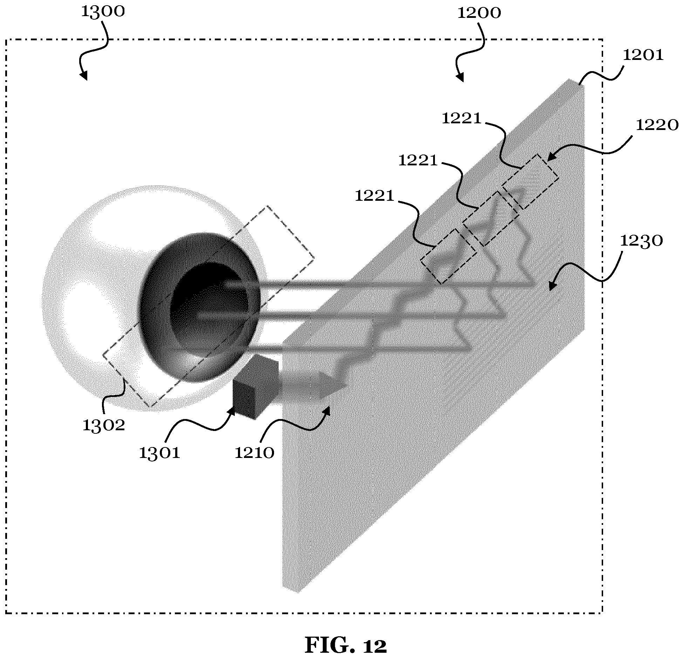

FIG. 12 shows this exemplary optical device 1200. The optical device 1200 may be implemented into AR glasses 1300. The optical device 1200 includes an incoupling grating 1210 (e.g., a Diffractive Optical Element (DOE)), an intermediate grating 1220 (e.g., another DOE) and an outcoupling grating 1230 (e.g., another DOE), wherein these optical elements are provided on the surface of a waveguide 1201. Further, these optical elements can be made with, e.g., nanoimprint lithography (surface relief gratings) or using holographic recording (e.g., volume Bragg gratings, volume holograms, etc.).

The intermediate grating 1220 includes a plurality of optical segments 1221. The intermediate grating 1220 performs exit pupil expansion in a first direction, and the outcoupling grating 1230 outcouples light from the optical device 1100, and performs exit pupil expansion in a second direction. As a result of the exit pupil expansion in the two directions, a large eye motion box 1302 ("eye-box") of the AR glasses 1300 can be illuminated.

The AR glass 1300 further includes an image generator 1301. Light generated by the image generator 1301 is injected into the waveguide 1201 of the optical device 1200 (e.g., light of an image generated by a display and imaging optics) using the incoupling grating 1210. The intermediate grating 1220 then performs the exit pupil expansion in the one direction, and the outcoupling grating 1230 outcouples light, i.e. couples the light of the image into the user's eye.

Such AR glasses 1300 have the advantage that no individual fitting is needed, as it may be used by users with different inter-pupillary distance (distance between pupils) and different eye relief (distance from last surfaces of the AR glasses 1300 to the user's eye). This is achieved as a result of the large eye-box 1302, which can be illuminated entirely. Notably, the range of inter-pupillary distances, which covers 98% of adult populations is 53.5 - 72.5 mm. The position of the pupil changes depending on the viewing direction.

However, the optical losses in the optical device 1200 are rather high, because different potential users having different, e.g., inter-pupillary distance or eye relief have to be satisfied, and also different directions of view and corresponding movement of the user's pupil (i.e., for large field of view) have to be accommodated for. Thus, the eye-box 1302 needs to be large, but is entirely and constantly illuminated by the optical device 1200 regardless of the actual properties and viewing position of the user's eye. As a consequence, a high display brightness is needed, and thus the power consumption is high.

Therefore, also in view of this exemplary optical device 1200, an objective of the embodiments of the invention is to reduce the losses of light. For instance, by reducing losses of light, it may be possible to enable a longer battery lifetime, a reduction in the weight of the battery, etc. Hence, the weight of the NED device may be decreased.

A first aspect of the invention provides an optical device for a near eye display, the optical device comprising a waveguide; a first Optical Element (OE), provided on the waveguide and configured to receive light and couple the light into the waveguide towards a switchable second OE; the switchable second OE provided on the waveguide and comprising a plurality of independently switchable optical segments arranged one after the other along the waveguide, wherein the switchable second OE is configured to receive the light from the first OE and redirect the light, with one or more of the switchable optical segments, into the waveguide towards a third OE; and the third OE provided on the waveguide and configured to couple the light received from the switchable second OE out of the optical device.

The optical device may be, or may be incorporated in, for example, an optical combiner of a NED (e.g., in AR glasses).

The optical device includes at least one waveguide. The waveguide may be a light guide, a (flat) glass plate, a slab multimode waveguide, or the like. In some embodiments, the optical device may comprise more than one waveguide.

The first OE and/or the switchable second OE and/or the third OE may, e.g. each, be based on diffractive optical elements or holographic optical elements, without limiting the present disclosure to a specific type of the optical elements.

The optical device may allow for an individual switching of the switchable optical segments. For example, the optical device may be configured such that each switchable optical segment can be switched on its own/alone, or together with one or more other optical segments. Each optical segment may have several (switching) states. Moreover, each switchable optical segment may be switched at any time to one of at least two, or at least three, determined (switching) states (e.g., first state, second state, and third state).

In some embodiments, there may also be spacing layers or air gaps in between different layers of the switchable optical segments.

The optical device enables to out couple light only from a certain region of the third OE. Thus, the optical device of the first aspect may reduce optical losses, by illuminating only necessary areas of the eye-box, i.e., the areas where the pupil of user's eye is currently located. Further, the optical losses may be reduced by (e.g., dynamically) changing the area of the eye-box that is illuminated, as the pupil of the user's eye moves. With the reduction of the optical losses, less energy can be consumed, and a smaller battery may accordingly be used. Furthermore, the device may be lighter because of the smaller battery. The optical device of the first aspect may consequently realize more energy-efficient AR glasses.

The optical device of the first aspect may be used, for example in a NED device, with Liquid Crystal on Silicon (LCOS), Digital Light Processing (DLP) or any other type of non-emissive light generators (such as an image generator) illuminated with Light-Emitting Diodes (LEDs) or laser, or other narrow spectrum light sources. It may also be used in combination with emissive light generators, such as light generators based on micro-LED or OLED or micro-OLED. In all cases, the optical device of the first aspect provides a smaller requirement for brightness of the light generators, compared to a conventional optical device/optical combiner.

Overall, the first aspect of the disclosure provides an optical device, which allows reducing losses of light in a NED device. The optical device avoids unnecessary illumination. In particular, the optical device is configured to project light (of an image) only to an area of an eye-box that corresponds to a pupil of the user's eye. The optical device of the first aspect thus avoids illuminating the entire eye-box all the time. As a consequence, the optical device leads to reduced power consumption.

In a further implementation form of the first aspect, each of the switchable optical segments is arranged to redirect received light to a different determined region of the third OE.

For instance, different switchable optical segments may have different, e.g., shapes, orientation of lines, tilt angles, etc. Moreover, each switchable optical segment maybe arranged or positioned such that it redirects the light to a different specific (determined region) of the third OE.

In a further implementation form of the first aspect, the optical device is further configured to obtain a position information of an eye and/or a pupil of a user of the NED, and select, based on the position information, one or more switchable optical segments of the second OE for redirecting the light.

Thus, the light is directed to the position, at which it is currently needed, and unnecessary large area illumination can be avoided.

In a further implementation form of the first aspect, the position information comprises one or more of:
- a central position of an eye,
- an eye relief,
- a vertical coordinate of a central position of an eye,
- a horizontal coordinate of a central position of an eye,
- a position of an eye's pupil,
- a direction of view,
- a diameter of a pupil.

The position information may be a position information of the eye, or it may a position information of an eye's component such as the diameter of the pupil. The optical device is usable for a variety of users having different eye characteristics.

In an implementation form of the first aspect, each switchable optical segment is configured to redirect received light into a first direction, towards the third OE, when switched to a first state, and/or each switchable optical segment is configured to reflect received light by total internal reflection into a second direction, when switched to a second state, and/or each switchable optical segment is configured to redirect only a part of received light into the first direction, when switched to a third state. In some embodiments, there may be more than three states, without limiting the present disclosure to a specific number of states.

In a further implementation form of the first aspect, each switchable optical segment of the switchable second OE comprises an OE layer configured to redirect light towards the third OE; a polarization switching element; and a polarization selective element; wherein the polarization switching element is arranged to receive the light from the first OE, and is configured to output the received light with a first polarization when the switchable optical segment is switched to the first state, and to output the received light with a second polarization when the switchable optical segment is switched to the second state; and wherein the polarization selective element is arranged to receive the light from the polarization switching element, and is configured to output the received light of the first polarization to the OE layer and to output the received light of the second polarization into the waveguide.

This provides an efficient implementation of switching the optical elements and segments, and outcoupling the light only to where it is needed, by selecting the appropriate switchable optical segments.

In a further implementation form of the first aspect, the optical device is further comprising another waveguide; wherein each switchable optical segment of the switchable second OE comprises a polarization switching element arranged to receive the light from the first OE, and configured to output the received light with a first polarization when the switchable optical segment is switched to the first state, and to output the received light with a second polarization when the switchable optical segment is switched to the second state; a polarization selective element arranged to receive the light from the polarization switching element, and configured to output the received light of the first polarization into the other waveguide and to output the received light of the second polarization into the waveguide; and an OE layer arranged to receive the light of the first polarization from the polarization selective element over the other waveguide, or arranged to receive the light of the second polarization from the polarization selective element over the waveguide, and configured to redirect the received light to the third OE.

This provides an efficient implementation of switching the optical elements and segments, and outcoupling the light only to where it is needed, by selecting the appropriate switchable optical segments

In a further implementation form of the first aspect, the polarization switching element comprises at least one of:
- a liquid crystal,
- a holographic polymer dispersed liquid crystal,
- a meta-surface,
- a grating combined with a liquid crystal,
- a phase-change material,
- an electro-optical material,
- a surface relief grating generated using a surface acoustic wave.

In a further implementation form of the first aspect, the switchable second OE further comprises driving electronics configured to individually switch each of the switchable optical elements to a predetermined state (e.g., first, second, or third state).

In particular, the driving electronics may be based on thin-film transistor based driving electronics, silicon based driving electronics, etc.

This provides an efficient and particularly compact implementation of driving electronics for the optical device.

In a further implementation form of the first aspect, the third OE is at least partially transparent.

Thus, the user can see through the third OE, and an image that is formed by the light that is outcoupled by the third OE can be overlaid with a real world image in the user's eye.

In a further implementation form of the first aspect, the first and/or the third OE and/or an OE layer in the switchable second OE comprises one of:
- a surface relief grating on a surface of the waveguide,
- a volume Bragg grating,
- a volume hologram,
- one or more prisms,
- one or more partially reflective mirrors,
- a wedge.

In a further implementation form of the first aspect, the optical device is further comprising a coating layer or an additional OE provided on the surface of the waveguide between the first OE and the switchable second OE and/or between the switchable second OE and the third OE, for reducing polarization rotations at each total internal reflection.

A second aspect of the invention provides a NED device comprising at least one optical device according to the first aspect or one of the implementation forms of the first aspect, and an image generator configured to emit light corresponding to an image to a waveguide of the at least one optical device.

The NED device may be AR glasses. Moreover, the NED device including the optical device may have the advantage of reduced energy consumption, according to the above-described advantages of the optical device. Thus, smaller batteries are sufficient, so that the overall form factor of the NED device may be made more compact. Moreover, the NED device may be lighter, or it may alternatively have more autonomy, a fully untethered device, etc.

In an implementation form of the second aspect, the NED device is further comprising a pupil-tracker unit configured to determine position information of an eye of a user of the NED device, wherein the NED device is configured to select, based on the position information, one or more switchable optical segments of the second OE of the at least one optical device for redirecting the light to the third OE. In a further implementation form of the second aspect, the third OE is configured to couple the light corresponding to the image out of the NED device; and the third OE is transparent.

The NED device of the second aspect enjoys all the advantages provided by the optical device of the first aspect. Furthermore, the NED device may be extended by respective implementations, as described above for the optical device of the first aspect.

### BRIEF DESCRIPTION OF THE DRAWINGS

The above described aspects and implementations are explained in the following description of embodiments with respect to the enclosed drawings:
- FIG. 1: shows a schematic view of an optical device for a NED, according to an embodiment of the invention.
- FIG. 2: shows a schematic view of a NED device comprising the optical device, according to an embodiment of the invention.
- FIGS. 3A-C: show schematic diagrams of redirecting received light to different determined regions of the third OE.
- FIGS. 4A-D: show schematic views of different examples of optical layout of the optical device.
- FIG. 5: shows a schematic view of a diagram illustrating the switchable optical segments being (only) partially switched on.
- FIG. 6: shows a schematic view of a diagram illustrating a layout of the switchable second OE based on liquid crystal material.
- FIG. 7: shows a cross-section of the optical device along the beam path.
- FIG. 8: shows a schematic view of a diagram illustrating a polarization switching element generated based on a surface acoustic wave.
- FIG. 9: shows a schematic view of another layout of the switchable second OE based on a liquid crystal material.
- FIG. 10: shows a schematic view of yet another layout of the switchable second OE based on a liquid crystal material.
- FIG. 11: shows a schematic view of a diagram illustrating the device comprising the switchable second OE outcoupling different wavelengths of light in the selected part of eyebox.
- FIG. 12: shows a schematic view of an exemplary optical device.

### DETAILED DESCRIPTION OF EMBODIMENTS OF THE INVENTION

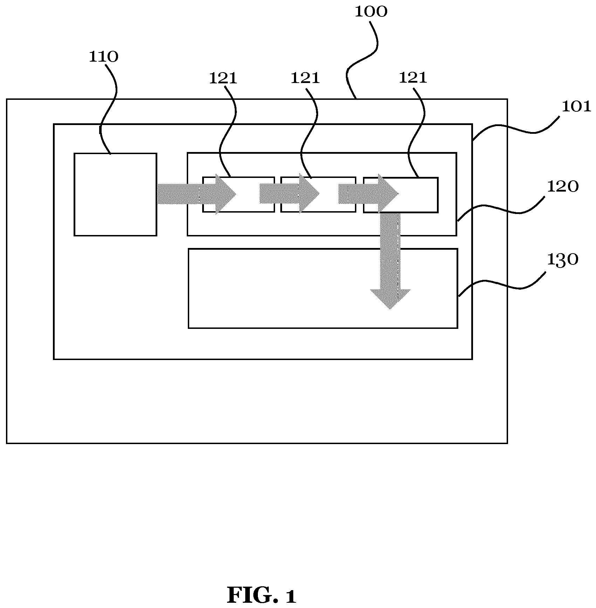

FIG. 1 shows a schematic view of an optical device 100 for a NED (device), according to an embodiment of the invention. The optical device 100 includes a waveguide 101, a first OE 110, a switchable second OE 120, and a third OE 130.

The first OE 110 is provided on the waveguide 101, for instance is provided on a surface of the waveguide 101. The first OE 110 is configured to receive light, and is configured to couple the light (as indicated with an arrow in FIG. 1) into the waveguide 101 towards the switchable second OE 120.

The switchable second OE 120 is provided on the waveguide 101, for instance is provided on a surface of the waveguide. The second OE 120 may be provided on the same surface of the waveguide 101 than the first OE. The second OE 120 includes a plurality of independently switchable optical segments 121, which are arranged one after the other along the waveguide 101. Hereinafter, the plurality of switchable optical segments are generally indicated with the reference number 121.

The switchable second OE 120 is configured to receive the light from the first OE 110, and to redirect the light, with one or more of the switchable optical segments 121, into the waveguide 101 towards the third OE 130.

The third OE 130 is provided on the waveguide 101, for instance is provided on a surface of the waveguide. The third OE 130 may be provided on the same surface of the waveguide 110 than the first OE 110 and/or than the second OE 120. The third OE 130 is configured to couple the light received from the switchable second OE 120 out of the optical device 100.

In the optical device 100, only the second OE2 120 may be switchable. Further, the OE2 120 may be positioned away from direction of a view of the user, thus it does not need to be transparent. The OE3 130, however, may be based on a transparent element, to enable passing real-world light.

The optical device 100 allows using the waveguide 101 for three colors instead of one color per waveguide, or two waveguides for three colors. For instance, if the first OE 110 shows dispersion, light with different colors diverges spatially after interaction with the OE 110, while propagating in the waveguide 101. The switchable second OE 120 may be used to correct this spatial divergence of the light. The correction may be performed in a time-multiplexed manner. The switchable second OE 120 may provide the flexibility to perform such correction for different types of light generators that provide light to the optical device 100. The switchable second OE 120 may also be used for correction of artefacts in the projected image, such as color non-uniformity, or to increase of the field of view.

The optical device 100 maybe used in combination with Laser beam scanning. This allows simplification of the optical layout of diffractive optical elements. The optical device 100 may also replace adjustable mirrors (which are moved mechanically), which are conventionally used for adjustment of an image for different inter-pupillary distances.

Infrared (IR) photodetectors maybe integrated into the optical device 100, in order to track a user's pupil or the environment, and to select based thereon the switchable optical segments 121, that direct light to the third OE 130.

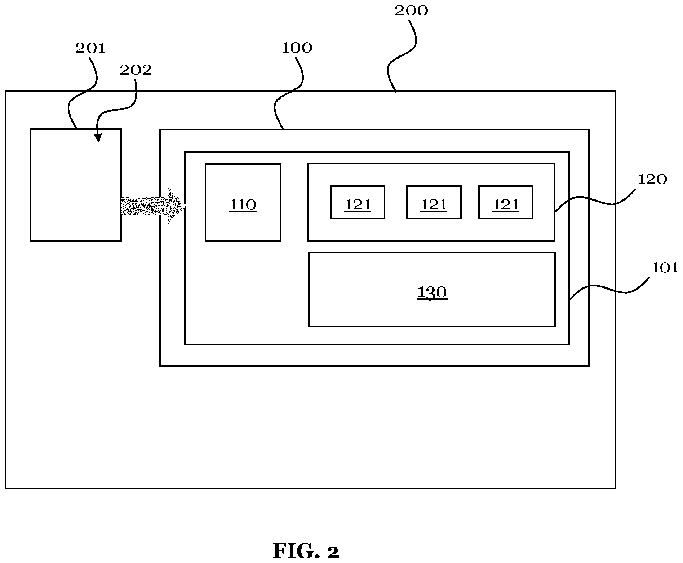

FIG. 2 shows a schematic view of a NED device 200 including the optical device 100, according to an embodiment of the invention. The NED device 200 comprises at least one optical device 100, according to an embodiment as e.g. shown in FIG. 1, and an image generator 201. The image generator 201 is configured to emit light corresponding to an image 202 to a waveguide 101 of the at least one optical device 100. This light is then outcoupled by the third OE 130 of the optical device 100, in particular to an eye of the user of the NED device 200. That is, the third OE 130 is configured to couple the light corresponding to the image 202 out of the NED device 200. Further, the third OE 130 is transparent, so that the image 202 is overlaid with a user's view of the real world, when the user views the third OE 130.

The NED device 200 may comprise a circuitry (not shown in FIG. 2). The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

The NED device 200 may further comprise a pupil-tracker unit configured to determine a position information of an eye of a user of the NED device 200. Further, a processor of the NED device 200 maybe configured to select, based on the position information, one or more switchable optical segments 121 of the second OE 120 of the at least one optical device 100, for redirecting the light to the third OE 130.

The NED device 200 has the advantage of an increased efficiency of the optical path from the image generator 201 to the eye of the user. For example, much less light is blocked because of the size of the pupil of the user. The use of the optical device 100 in the NED device 200 may allow using a less bright light source (e.g. display), and therefore a smaller battery (or have a higher brightness and autonomy life with the same battery).

The switchable optical segments 121 of the optical device 100, here of the NED device 200, also consume some electrical power, however, this power is comparably little, because of the small amount of pixels and their capacitor type (e.g., estimations show the consumed power of each switchable optical segment is <10mW).

Instead of illuminating the whole eye motion box with a horizontal size of about 20mm, for comfortable experience, the plurality of switchable optical segments 121 may illuminate only ∼2mm regions of the eye motion box in horizontal direction. Thus, unnecessary illumination, and losses of light are avoided, in particular up to a factor of 10.

Each of the switchable optical segments 121 may be based on reflective elements. For instance, in the first state ("inactive"), it may work like a mirror (e.g., light is reflected at Total Internal Reflection (TIR) angle). In the second state ("active"), it may have the function of a diffraction grating (ideally of a slanted diffraction grating), so that light is guided towards the third OE 130 (i.e., outcoupling element).

Each of the switchable optical segments 121 may reflect a beam in one direction in the first state, and may reflect/transmit a beam in a different direction in the second state. The optical device 100 can thus be seen to comprise a plurality of individually controlled pixels (the switchable optical segments 121), which are responsible for illumination of the eye of the user.

In the following, the plurality of switchable elements 121 are further identified by the alphabetical letters (i.e., 121a, 121b, and 12c) in order to describe the functions of each switchable element independently, without limiting the present disclosure. For example, the switchable element 121a may be similar (or identical) to the switchable element 121b and/or the switchable element 121c.

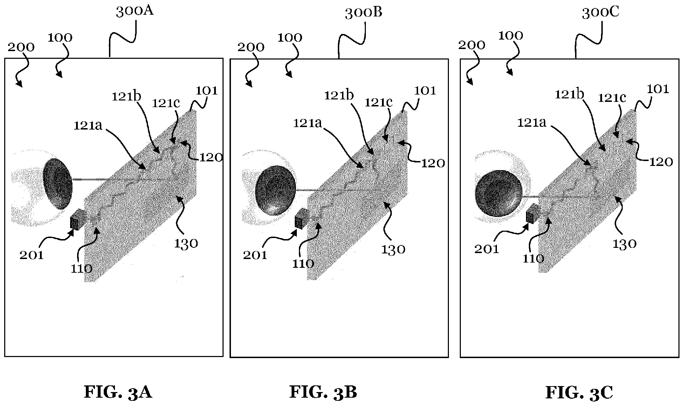

Reference is now made to FIGs. 3A-3C, which show schematic diagrams 300A, 300B, 300C of redirecting received light to different determined regions of the third OE 130. In diagram 300A-300C of FIGs. 3A-3C, the NED device 200 includes the optical device 100 and the image generator 201. The first OE 110 receives light and couples the light into the waveguide 101 towards the switchable second OE 120. The switchable second OE 120 is exemplarily shown to have a first switchable optical segment 121a, a second switchable optical segment 121b, and a third switchable optical segment 121C.

In diagram 300A of FIG. 3A, the switchable second OE 120 receives the light from the first OE 110 and redirects the received light, by only the third switchable optical segment 121C, to a determined region of the third OE 130. The third OE 130 couples the light received from the switchable second OE 120 out of the optical device 100. In other words, the switchable element 121c redirects light to its determined first direction.

In diagram 300B of FIG. 3B, the switchable second OE 120 receives the light from the first OE 110 and redirects the received light, by only the second switchable optical segment 121b, to a (different) determined region of the third OE 130. The third OE 130 couples the light received from the switchable second OE 120 out of the optical device 100. In other words, the switchable element 121b redirects light to its determined first direction.

In diagram 300C of FIG. 3C, the switchable second OE 120 receives the light from the first OE 110 and redirects the received light, by only the first switchable optical segment 121a, to a (different) determined region of the third OE 130. The third OE 130 couples the light received from the switchable second OE 120 out of the optical device 100. In other words, the switchable element 121a redirects light to its determined first direction.

The selection of the first, second and/or third switchable optical segment 121, may be based on the position of the user eye and/or the region of the eye-box where the pupil is located.

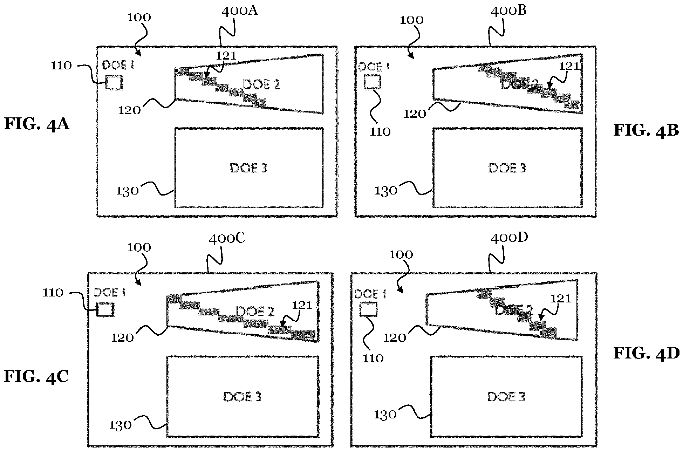

Reference is now made to FIGs. 4A-4D, which are schematic views of an exemplary optical layout of the optical device 100, according to an embodiment.

In this embodiment, the first OE 110 and/or the second OE 120 and/or the third OE 130 are based on diffractive OEs (DOEs). Hereinafter, the first OE 110 and DOE 1 is used interchangeably. Moreover, the second OE 120 and DOE 2 is also used interchangeably. The third OE 130 and DOE 3 is also used interchangeably
In the switchable DOE 2, optically active parts, i.e. switchable optical segments that are on or that are in a first state, (in a certain moment of time) 121 are partially shown in grey (note that, the switchable part may be larger than the regions indicated in grey). Depending, for instance, on the position of the user's eye different switchable optical segments of the second OE 120 (DOE 2) are turned on or off, respectively. The light may travel within one waveguide from DOE 1 to DOE 3, or within one waveguide layer from DOE 1 to DOE 2, and within a second layer from DOE 2 to DOE 3. The slope of the grey region indicating the active switchable optical segments is related to the eye relief. The central position of the grey regions is related to the position of the pupil.

In diagram 400A of FIG. 4A, a front view of the optical device 100 is illustrated, wherein switchable optical segments 121 of the DOE 2 are switched on for the left-most position of the pupil of the user.

In diagram 400B of FIG. 4B, a front view of the optical device 100 is illustrated wherein (different) switchable optical segments 121 of the DOE 2 are switched on for the right-most position of the pupil of the user.

In diagram 400C of FIG. 4C, a front view of the optical device 100 is illustrated, wherein switchable optical segments 121 of the DOE 2 are switched on for a long eye relief and for the pupil of the user in the center.

In diagram 400D of FIG. 4D, a front view of the optical device 100 is illustrated wherein optical segments 121 of the DOE 2 are switched on for a short eye relief and for the pupil of the user in the center.

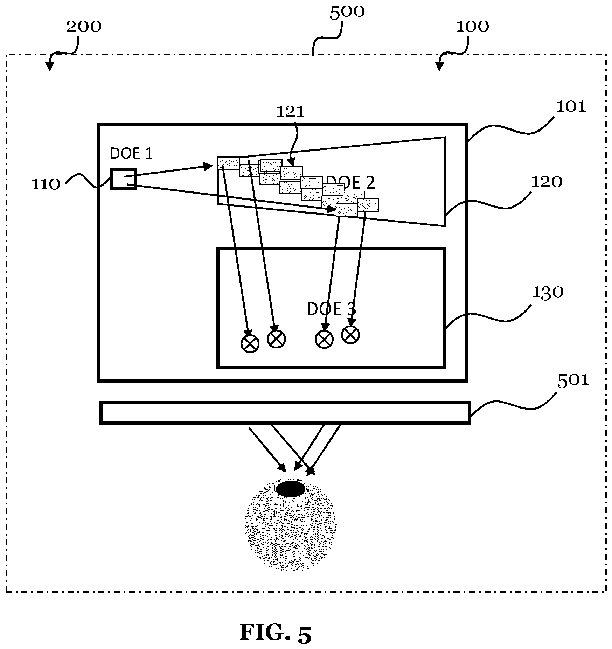

Reference is now made to FIG. 5, which is a schematic view of a diagram illustrating the optical device 100, of an NED device 200, according to an embodiment, wherein the switchable optical segments 121 are switched to the third state in which they redirect only part of received light ("partially active state"). In diagram 500 of FIG. 5, the NED device 200 further comprises a display 501.

In some embodiments, this third state of the segments 121 of the DOE 2 may be used, for instance, to illuminate the pupil of the user when it is in between two positions, to which two segments 121 in the second state would redirect the light in the DOE 3. The switchable optical segments 121 of the DOE 2 are switched on for the left-most position of the pupil (as shown in grey color) in FIG. 5.

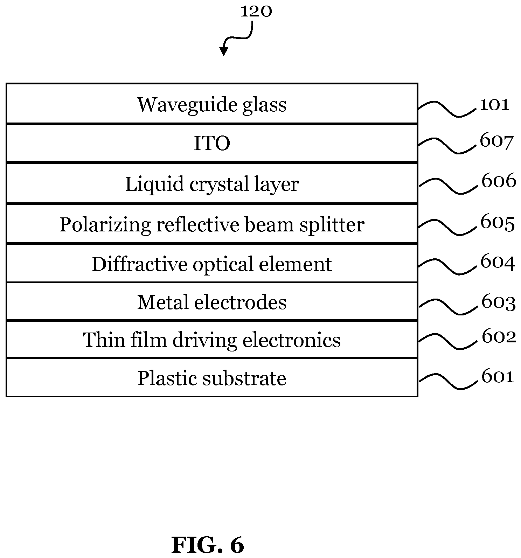

Reference is now made to FIG. 6, which is a schematic view of a diagram illustrating a layout of the switchable second OE 120 based on liquid crystal material.

As discussed, the switchable second OE 120 may be based on (holographic) polymer dispersed liquid crystals, liquid crystals, meta-surface or gratings combined with liquid crystals, phase-change materials or electro-optical materials, or surface acoustic waves.

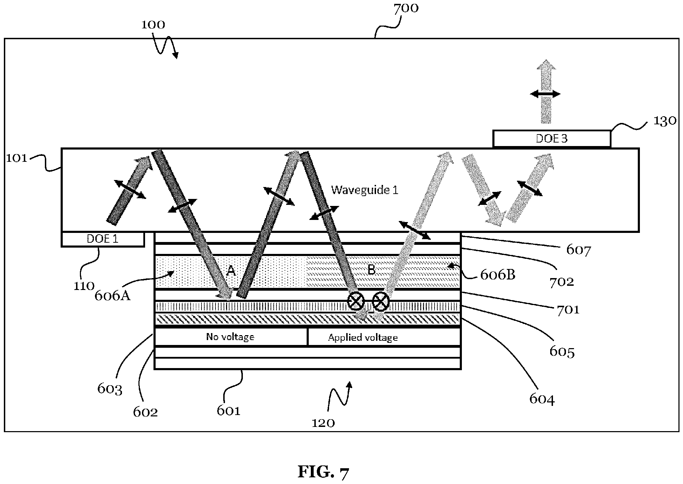

In FIG. 6 and FIG. 7, the optical layout and working principle of one implementation with one waveguide layer are illustrated.

In FIG. 6, an exemplary layout of the switchable second OE 120 based on liquid crystal material is shown. Liquid crystal material may be configured to rotate polarization of incoming light (beam). Light in one polarization is reflected in one direction, and in the other polarization it is reflected in a second direction. Moreover, the second OE2 may further include additional polarizing layers, optional spacing and alignment layers, etc. Furthermore, additional diffractive or holographic optical elements may be placed on the outer surface of the waveguide.

The switchable second OE 120 may comprise, a plastic substrate 601, thin film driving electronics 602, metal electrodes 603, an OE layer 604 which may be a diffractive optical element layer, a polarization selective element 605 which may be a polarizing reflective beam splitter, a polarization switching element 606 which may be a liquid crystal layer, and an Indium tin oxide (ITO) layer 607 which is provided on the waveguide 101.

The driving electronics 602 of the switchable second OE 120 maybe made on glass using thin-film electronic technology, e.g., using InGaZnO transistors on plastic film or LTPS. Such thin film electronics technologies may support much higher voltage than silicon circuits. Therefore, in some embodiments, the use of wider range of electro-optical materials is possible because some materials require high voltage to work at fast (120Hz or more) refresh rates. It also allows making such device at a lower cost.

In diagram 700 of FIG. 7, a cross-section along the beam path is illustrated, in an optical device 100 according to an embodiment of the invention. The switchable second OE 120 comprises the plastic substrate 601, the thin film driving electronics 602, the metal electrodes 603, the OE layer 604 (DOE 604) and spacer, the polarization selective element 605 (for example, it may be the polarizing reflective beam splitter), an alignment layer 701, the polarization switching element 606 (for example, it may be the liquid crystal layer) which comprises a segment A 606A and a segment B 606B which are switchable half wave plate, an alignment layer 702, and the ITO layer 607 which are provided on the waveguide glass 101.

Light is injected into the waveguide 101 from DOE 1 and it travels in one polarization state. If no voltage is applied, polarization is not changed, and light is simply reflected at the TIR angle (segment A 606A). Under applied voltage (segment B 606B) the polarization is changed to the second polarization state. Moreover, light is passed through polarization selective element 605 and light interacts with OE layer 604. The momentum changes and light changes direction of propagation (shown using different intensity of grey color). After reflection the light interacts again with the polarization switching element 606 (e.g., the liquid crystal layer) and polarization returns to the initial polarization state. Afterwards, the light is guided towards the outcoupling element DOE 3. After the DOE 2, this light travels towards the DOE 3. DOE 1 or DOE 3 can be on any side of the waveguide (even on both).

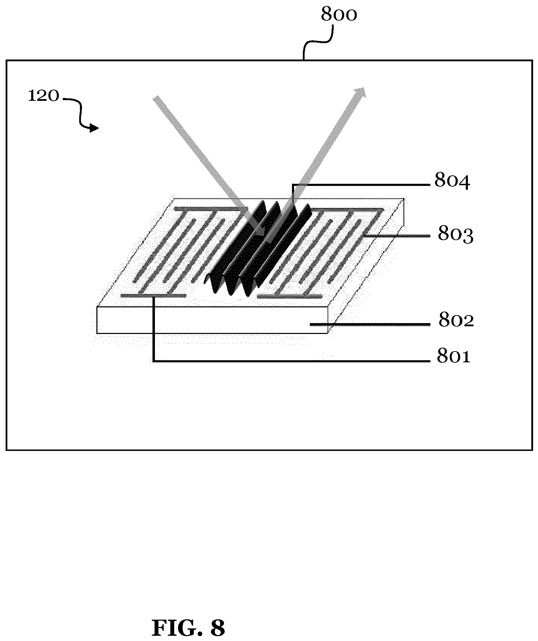

Reference is made to FIG. 8, which is a schematic view of the diagram 800 illustrating a grating (a polarization switching element 606) generated based on surface acoustic wave (SAW).

The grating (the polarization switching element 606) generated based on surface acoustic wave (SAW) may be provided in second OE 120 of the optical device 100 and/or the NED device 200. The grating (the polarization switching element 606) comprises a first patterned electrode 801, a piezoelectric substrate 802, a second patterned electrode 803, and an elastic deformation forming a surface relief grating on a surface of piezoelectric material created with SAW 804.

The SAW might be standing or dynamic. For example, if there is no voltage applied on the electrodes 801, 803, the substrate 802 works as a flat dielectric surface. However, if AC voltage is applied, the substrate 802 works as a grating. Typically, more than one transducer may be used. Moreover, the period of the grating is defined by the shape of electrodes 801, 803.

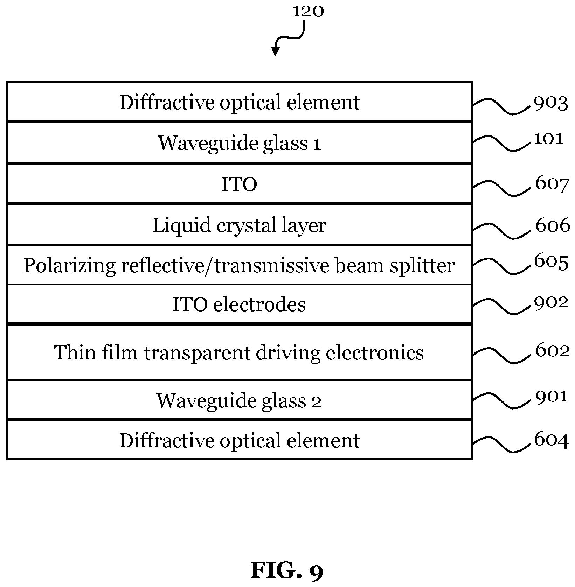

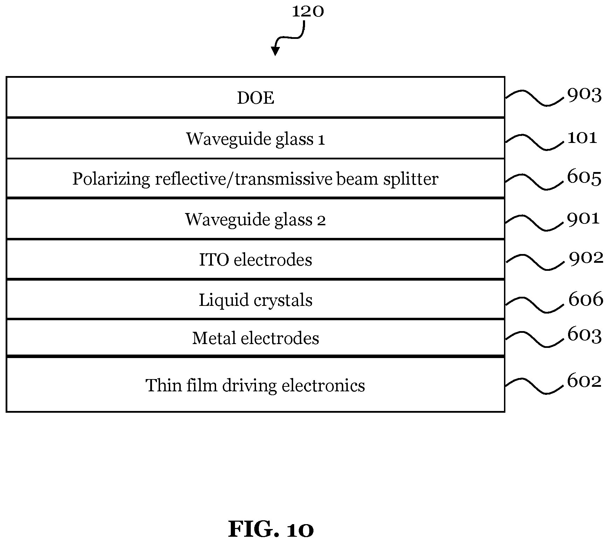

Alternative implementations of the second OE 120 are also possible. For example, they may include two waveguide layers instead of the only one. FIG. 9 and FIG. 10 show other possible different options of the optical stack of the second OE 120. Note that the first state may be selected, when voltage is applied, and the second state may be selected, when there is no voltage applied, or vice versa, (depending on the type of liquid crystals and polarizers used in the device). Thin-film electronics can also be placed aside of switchable optical element and control the element with the patterned ITO electrodes.

Reference is now made to FIG. 9 which is another schematic view of a diagram illustrating a layout of the switchable second OE 120 based on liquid crystal material.

The switchable second OE 120 comprises the an OE layer 604 (for example, it may be a diffractive optical element), a waveguide glass 2 901, the thin film transparent driving electronics 602, ITO electrodes 902, the polarization selective element 605 (for example, it may be a polarizing reflective or transmissive beam splitter), the polarization switching element 606 (for example it maybe the liquid crystal layer), the ITO 607, provided on the waveguide glass 1101, and diffractive optical element 903.

Liquid crystal material rotates polarization of incoming beam if voltage is applied. Light is initially injected into waveguide glass 1 101. Light in one polarization is reflected back into waveguide 1101 and in other polarization is transmitted to the waveguide 2 901. This layout of the second OE 120 may have additional polarizing layers. Spacing and alignment layers are not shown. Diffractive/holographic optical elements may also be provided on the outer surfaces of the waveguide 1101 and/or the waveguide 2 901.

Reference is made to FIG. 10 which is another schematic view of a diagram illustrating a layout of the switchable second OE 120 based on liquid crystal material.

The switchable second OE 120 comprises the thin film driving electronics 602, the metal electrodes 603, the polarization switching element 606 (e.g., a Liquid crystal layer), the ITO electrodes 902, the waveguide glass 2 901, the polarization selective element 605 (for example, it may be the polarizing reflective or transmissive beam splitter) provided on the waveguide glass 1 101 and another OE layer 903 (for example, it maybe a DOE).

Here, the polarization switching element 606 (e.g., a liquid crystal material) rotates polarization of incoming beam if voltage is applied. Light in one polarization is reflected back into waveguide 2 901 and in other polarization is transmitted to the waveguide 1101. This cell may have additional polarizing layers. Spacing and alignment layers are not shown.

In some embodiments, some elements may be provided which can be varied. For example, the beam splitter can be combined with meta-surface, e.g., to perform additional wavefront modification.

Moreover, the described configuration of polarizations is not the only possible one. Other options include:
1. one linear polarization is transmitted, orthogonal one reflected,
2. linearly polarized light is transmitted, circularly polarized is reflected,
3. circularly polarized light is transmitted, linearly polarized is reflected,
4. circularly left polarized light is transmitted, circularly right polarized light is reflected,
5. circularly right polarized light is transmitted, circularly left polarized light is reflected.

Furthermore, the liquid crystal layer can be used for quarter- or half-wave retardation. Also, the thin film electronics can be placed under the switchable element or aside (with patterned ITO electrodes).

In some embodiments, the first OE, e.g., the DOE1 can also be replaced with a prism or a wedge to couple light into the waveguide 901.

In some embodiments, the third OE 130, e.g., DOE3 can be replaced with reflective outcoupling element (few prisms glued together).

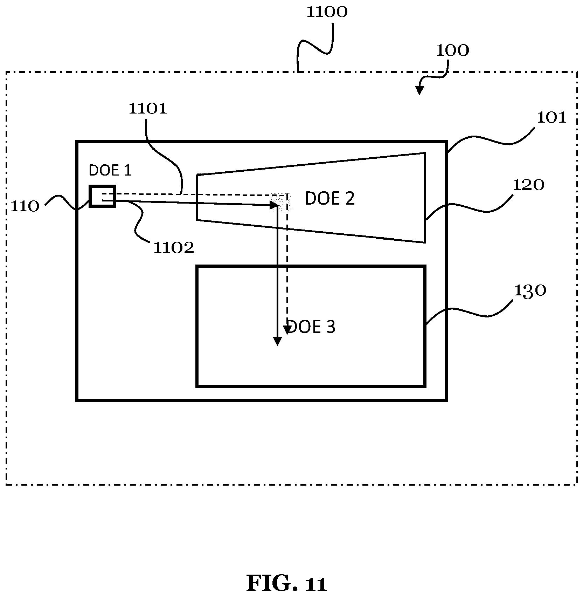

Reference is now made to FIG. 11, which is a schematic view of a diagram 1100 illustrating the device 100 according to an embodiment of the invention, wherein the switchable second OE 120 (here DOE 2) directs different wavelengths of light 1101, 1102 to different regions of the third OE 130 (here DOE 3). Accordingly, the third OE 130 outcouples different wavelengths to different selected parts of the eye-box.

For example, in case of a dispersive DOE 1, light of different wavelengths is incoupled and travels within the waveguide 101 at different angles above the TIR (in other words, the light of different colors may have different mode numbers).

By using the DOE 2, the light of each color may be directed towards the DOE 3 despite the dispersion of the DOE 1. Furthermore, this allows using only one waveguide and reducing color non-uniformity artifacts.

In other words, the switchable second OE 120 (DOE 2) can be used to correct the dispersion of the DOE 1.

## Claims

1. An optical device (100) for a near eye display (200), the optical device (100) comprising:
a waveguide (101);
a first Optical Element, OE, (110) provided on the waveguide (101) and configured to receive light and couple the light into the waveguide (101) towards a switchable second OE (120);
the switchable second OE (120) provided on the waveguide (101) and comprising a plurality of independently switchable optical segments (121) arranged one after the other along the waveguide (101),
wherein the switchable second OE (120) is configured to receive the light from the first OE (110) and redirect the light, with one or more of the switchable optical segments (121), into the waveguide (101) towards a third OE (130); and
the third OE (130) provided on the waveguide (101) and configured to couple the light received from the switchable second OE (120) out of the optical device (100).

2. The optical device (100) according to claim 1, wherein:
each of the switchable optical segments (121) is arranged to redirect received light to a different determined region of the third OE (130).

3. The optical device (100) according to claim 1 or 2, further configured to:
obtain a position information of an eye and /or a pupil of a user of the near eye display (200), and
select, based on the position information, one or more switchable optical segments (121) of the second OE (120) for redirecting the light.

4. The optical device (100) according to claim 3, wherein:
the position information comprises one or more of:
- a central position of an eye,
- an eye relief,
- a vertical coordinate of a central position of an eye,
- a horizontal coordinate of a central position of an eye,
- a position of an eye's pupil,
- a direction of view
- a diameter of a pupil.

5. The optical device (100) according to one of the claims 1 to 4, wherein:
each switchable optical segment (121) is configured to redirect received light into a first direction, towards the third OE (130), when switched to a first state, and/or
each switchable optical segment (121) is configured to reflect received light by total internal reflection into a second direction, when switched to a second state, and/or
each switchable optical segment (121) is configured to redirect only a part of received light into the first direction, when switched to a third state.

6. The optical device (100) according to claim 5, wherein each switchable optical segment of the switchable second OE comprises:
an OE layer (604) configured to redirect light towards the third OE (130);
a polarization switching element (606); and
a polarization selective element (605);
wherein the polarization switching element (606) is arranged to receive the light from the first OE (110), and is configured to output the received light with a first polarization when the switchable optical segment (121) is switched to the first state, and to output the received light with a second polarization when the switchable optical segment (121) is switched to the second state; and
wherein the polarization selective element (605) is arranged to receive the light from the polarization switching element (606), and is configured to output the received light of the first polarization to the OE layer (604) and to output the received light of the second polarization into the waveguide (101).

7. The optical device (100) according to claim 5, further comprising:
another waveguide (901);
wherein each switchable optical segment (121) of the switchable second OE (120) comprises:
a polarization switching element (606) arranged to receive the light from the first OE (110), and configured to output the received light with a first polarization when the switchable optical segment (121) is switched to the first state, and to output the received light with a second polarization when the switchable optical segment (121) is switched to the second state;
a polarization selective element (605) arranged to receive the light from the polarization switching element (606), and configured to output the received light of the first polarization into the other waveguide (901) and to output the received light of the second polarization into the waveguide (101); and
an OE layer (604, 903) arranged to receive the light of the first polarization from the polarization selective element (605) over the other waveguide (901), or arranged to receive the light of the second polarization from the polarization selective element (605) over the waveguide (101), and configured to redirect the received light to the third OE (130).

8. The optical device (100) according to claim 6 or 7, wherein:
the polarization switching element (606) comprises at least one of:
- a liquid crystal,
- a holographic polymer dispersed liquid crystal,
- a meta-surface,
- a grating combined with a liquid crystal,
- a phase-change material,
- an electro-optical material,
- a surface relief grating generated using a surface acoustic wave.

9. The optical device (100) according to one of the claims 1 to 8, wherein:
the switchable second OE (120) further comprises driving electronics (602) configured to individually switch each of the switchable optical elements (121) to a predetermined state.

10. The optical device (100) according to one of the claims 1 to 9, wherein:
the third OE (130) is at least partially transparent.

11. The optical device according to one of the claims 1 to 10, wherein:
the first (110) and/or the third OE (130) and/or an OE layer in the switchable second OE (120) comprises one of:
- a surface relief grating on a surface of the waveguide,
- a volume Bragg grating,
- a volume hologram,
- one or more prisms,
- one or more partially reflective mirrors,
- a wedge.

12. The optical device (100) according to one of the claims 1 to 11, further comprising:
a coating layer or an additional OE provided on the surface of the waveguide (101) between the first OE (110) and the switchable second OE (120) and/or between the switchable second OE (120) and the third OE (130), for reducing polarization rotations at each total internal reflection.

13. A Near Eye Display, NED, device (200) comprising:
at least one optical device (100) according to one of the claims 1 to 12,
an image generator (201) configured to emit light corresponding to an image (202) to a waveguide (101) of the at least one optical device (100).

14. The NED device (200) according to claim 13, further comprising:
a pupil-tracker unit configured to determine position information of an eye of a user of the NED device (200),
wherein the NED device (200) is configured to select, based on the position information, one or more switchable optical segments (121) of the second OE (120) of the at least one optical device (100) for redirecting the light to the third OE (130).

15. The NED device according to claim 13 or 14, wherein:
the third OE (130) is configured to couple the light corresponding to the image (202) out of the NED device (200); and
the third OE (130) is transparent.
